# EUROPEAN PATENT SPECIFICATION

(11) **EP 2 985 695 B1**
(45) Date of publication and mention of the grant of the patent: **19.08.2020**
(21) Application number: 13881891.9
(22) Date of filing: 25.10.2013
(51) Int. Cl.: G06F 9/4401

(54) **METHOD AND DEVICE FOR SETTING APPLICATION PROGRAM STATE**
VERFAHREN UND VORRICHTUNG ZUR EINSTELLUNG EINES ANWENDUNGSPROGRAMMSTATUS
MÉTHODE ET DISPOSITIF DE DÉFINITION D'ÉTAT DE PROGRAMME APPLICATION

(30) Priority: 08.04.2013 CN 201310119636
(43) Date of publication of application: 17.02.2016
(73) Proprietor: Xiaomi Inc., Beijing 100085 (CN)
(72) Inventor: ZHANG, Yang, Beijing 100085 (CN); SUN, Peng, Beijing 100085 (CN)
(74) Representative: Cabinet Beau de Loménie
(86) International application number: PCT/CN2013/085931
(87) International publication number: WO 2014/166231

(56) References cited:
- EP-A1- 1 993 273
- WO-A1-2013/065274
- CN-A- 101 001 167
- CN-A- 101 237 290
- CN-A- 101 923 609
- CN-A- 103 226 491
- US-A1- 2010 332 600
- US-A1- 2011 107 436
- US-A1- 2013 055 378
- Anonymous: "android - Cannot receive broadcast in ICS - Stack Overflow", , 25 April 2012 (2012-04-25), XP055363078, Retrieved from the Internet: URL:http://stackoverflow.com/questions/969 5514/cannot-receive-broadcast-in-ics [retrieved on 2017-04-07]

## Description

### TECHNICAL FIELD

The invention relates to the field of computer technology, and more particularly, to a method and a device for setting status of an application.

### BACKGROUND

The Android operating system is a kind of open-source operating system, which allows interactive communication between an operating system and applications and even between applications, utilizing a unique inter-process communication technique. For example, system broadcast is one form of such communication.

System broadcast is a non-targeted inter-process communication provided by the Android operating system, in which when a specific event occurs the operating system or an application sends a message without designating a receiver of the message. For example, an operating system may broadcast a message of BOOT_COMPLETE when a boot has been completed, and may broadcast a message of CONNECTIVITY_CHANGE at the time of changing network.

An application is in an inactive (stop) status after it is completed of installation, and in a status to be changed into an active (non-stop) status when it is started by a user. System broadcast messages are only directed to applications in active status.

Neither a normal termination of an application nor a restart of an operating system can change the application from the active status to the inactive status, unless a user selects an option when he or she enters the operating system and changes the status of the application from the active status to the inactive status manually.

At least the following problems have been found in the above technology:
If there is a system broadcast message, all the applications in active status will receive it and will self-start accordingly, which causes an increase of power consumption, and even worse, results in a threat to the privacy of users since the applications may gather the user information after they are self-restarted. Since there are numerous applications on a terminal, if a user changes the status of an application manually each time he or she utilizes the application, the operation will become rather cumbersome.

Document US 2013/055378 A1 discloses a method and a portable device for controlling permission settings for an application.

Documents EP 1 993 273 A1 discloses a controller of a mobile telephone which executes an application program and controls the execution of the application program based on a program stop permission flag of the application program.

Document WO 2013/065274 A1 discloses an information processing apparatus and a method for controlling an application related to a broadcast content by an application information table (AIT).

Document US 2011/107436 A1 discloses apparatus and methods for enabling protected premises networking capabilities.

Document US 2010/332600 A1 discloses a method and system to enhance user presence management to enable the federation of rich media sessions.

Internet article "android-Cannot receive broadcast in ICS - Stack Overflow" teaches that Android 3.0 introduced application states; all applications are installed with "inactive" state making broadcast receivers inactive; a user launching the applications triggers an application state update to "active".

### SUMMARY

In order to solve, in part, the above problems in the prior art, embodiments of the invention provide a method and a device for setting status of an application according to claims 1 and 5.

Some advantageous effects brought about by the embodiments of the invention may include:
By acquiring status setting permission information of an application, and setting the status of the application as an inactive status, the application is disabled to receive system broadcast messages. Hence, without changing the status of applications manually by users, the number of applications that will receive system broadcast messages may be effectively restrained, thereby solving the problem of increased power consumption caused by the applications receiving system broadcast messages, and decreasing the risk of leakage of the user information resulted from the self-restart of the applications after they have received system broadcast messages.

In another aspect, there is provided a computer program including instructions for executing the steps of a method for setting status of an application according to claim 1 when said program is executed by a computer.

In another aspect, there is provided a recording medium readable by a computer and having recorded thereon a computer program including instructions for executing the steps of a method for setting status of an application according to the above first aspect.

It should be understood that, the general description as above and the detailed description as below are merely exemplary, and do not limit the invention.

### BRIEF DESCRIPTION OF THE DRAWINGS

A brief introduction will be given hereinafter to the accompany drawings which will be used in the description of the embodiments in order to explain the technical solutions of the embodiments of the invention more clearly. Apparently, the drawings in the description below are merely for illustrating some embodiments of the invention. Those skilled in the art may obtain other drawings according to these drawings without paying any creative effort.
Fig. 1 is an exemplary flowchart of a method for setting status of an application according to a first embodiment of the invention;
Fig. 2 is an exemplary flowchart of an approach for setting status setting permission information according to a second embodiment of the invention;
Fig. 3 is an exemplary flowchart of an approach for setting status setting permission information in the method according to the second embodiment of the invention;
Fig. 4 is an exemplary flowchart of another approach for setting the setting permission information in the method according to the second embodiment of the invention
Fig. 5 is a schematic structural view of a device for setting status of an application according to a third embodiment of the invention.

Through the above accompany drawings, the specific embodiments of the invention have been shown, for which a more detailed description will be given as below. These drawings and textual description are not intended to limit the scope of the concept of the invention in any manner, but to explain the concept of the invention to those skilled in the art through particular embodiments.

### DETAILED DESCRIPTION

The features, technical solutions and advantages of the invention will become more apparent through a further detailed description given hereinafter to embodiments of the invention in conjunction with the accompany drawings.

### The First Embodiment

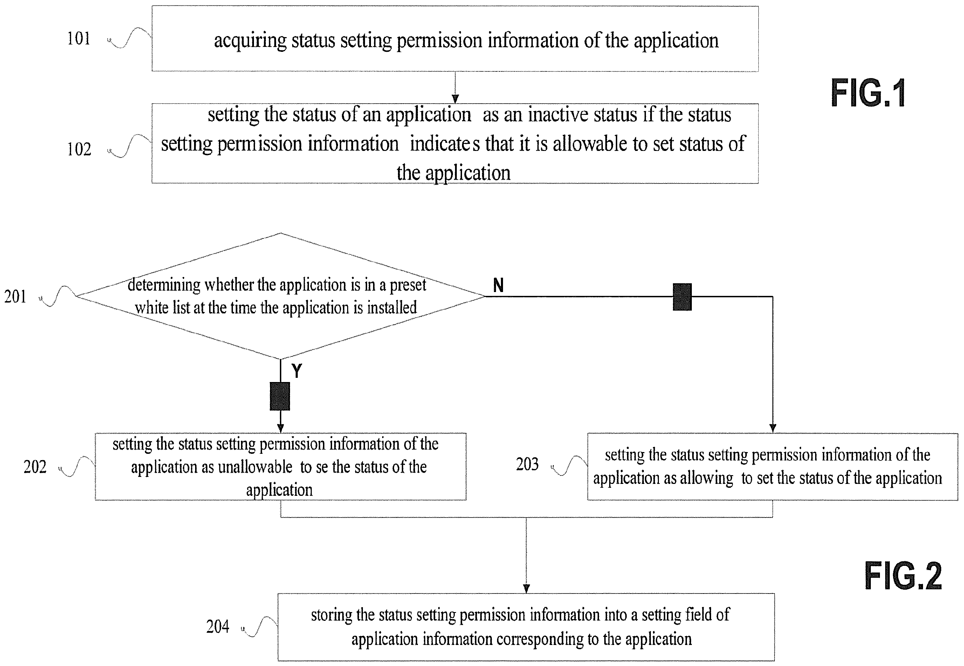

A method for setting status of an application is provided by an embodiment of the invention, as illustrated in Fig. 1.

The flow of the method includes the following steps.

In step 101, it is performed for acquiring status setting permission information of the application.

In step 102, it is performed for setting the status of the application as an inactive status if the status setting permission information indicates that it is allowable to set the status of the application.

It can be seen from the above that, in the first embodiment of the invention, by acquiring status setting permission information of an application, and setting the status of the application as an inactive status, the application is disabled to receive system broadcast messages. Hence, without manually changing the status of applications by users, the number of applications that will receive system broadcast messages may be effectively restrained, thus solving the problem of increased power consumption caused by the applications receiving system broadcast messages, and decreasing the risk of leakage of user information resulted from the self-restart of the applications after they receive system broadcast messages.

### The Second Embodiment

The PackageManager is a component that manages all the applications in an Android operating system. Application information of each application is stored in the PackageManager in a form of a package, wherein, the application information includes application identification, storage path, application permissions and the like corresponding to the application.

In the second embodiment of the invention, a new field is added to the application information corresponding to each application in advance, so as to store the status setting permission information of the application.

There are two approaches to set the status setting permission information of the application as following.

The First Approach: setting the status setting permission information when the application is installed.

Fig. 2 is an exemplary flowchart of an approach for setting the status setting permission information in the method according to the second embodiment of the invention. The flow includes the following steps.

In step 201, it is performed for determining whether the application is in a preset white list. If it is, step 202 is performed; and if it is not, step 203 is performed.

Here, the white list refers to a list in which applications that need to be run in background is recorded. That is to say, applications in the white list need to be in active status, and the statuses of which are not allowed to be changed. Those recorded in the white list are application identifications. The white list may be offered by an authoritative organization (an official organization or an organization has similar power and influence).

For determining whether the application is in the white list, the application identification of the installed application is searched to determine whether it matches an application identification in the preset white list. If it matches, it means the status of the application is not allowable to change; and if it does not match, it means the status of the application is unallowable to change.

In step 202, it is performed for setting the status setting permission information of the application to indicate that it is unallowable to set the status of the application. Then step 204 is performed.

Optionally, the status setting permission information may be content such as a number, a word and the like. For example, the status setting permission information may be a number of "0", or a word of "false", both of which indicate that it is unallowable to set the status of the application.

In step 203, it is performed for setting the status setting permission information of the application to indicate that it is allowable to set the status of the application.

Optionally, the status setting permission information may be content such as a number, a word and the like. For example, the status setting permission information may be a number of "1", or a word of "true", both of which indicate that it is allowable to set the status of the application.

In step 204, it is performed for storing the status setting permission information into a setting field of the application information corresponding to the application.

The Second Approach: setting the status setting permission information according to instructions from users.

In addition to the above approach of setting when the application is installed, an interface is also provided by the second embodiment of the invention for changing the above-mentioned setting field by an upper application, so as to set the status setting permission information according to instructions from users.

Users may input setting information in respect to a certain application through the above-mentioned upper application. The setting information indicates whether it is allowable to set the status of the application. Then, the status setting permission information of the application may be set according to the setting information.

Such approach of setting according to instructions from users is mainly for the purpose of satisfying certain demands from users in practical implementations, other than limiting the approaches to merely setting based on a the white list.

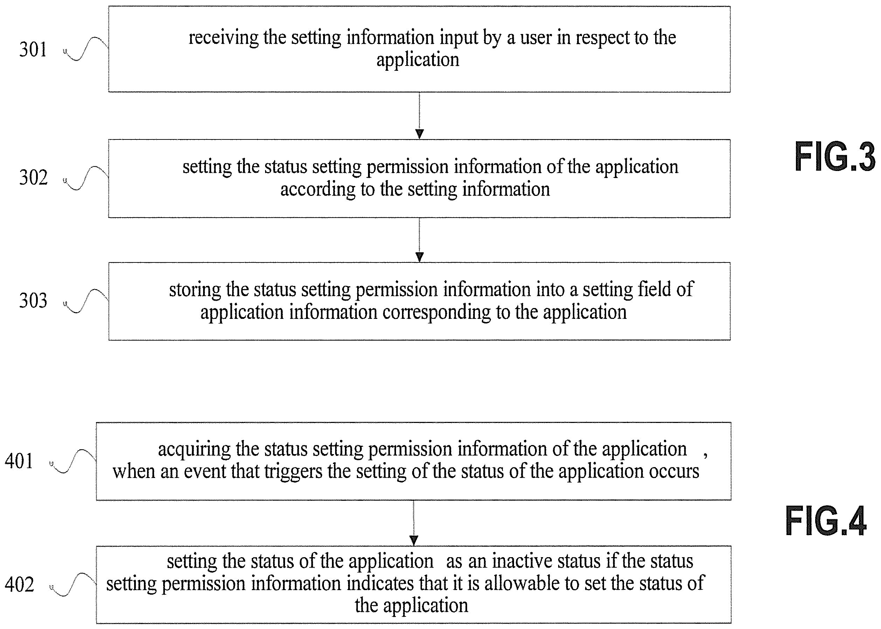

Fig. 3 is an exemplary flowchart of another approach for setting the status setting permission information in the method according to the second embodiment of the invention. The flow includes the following steps.

In step 301, it is performed for receiving setting information input by a user in respect to the application. The setting information indicates whether it is allowable to set the status of the application.

In step 302, it is performed for setting the status setting permission information of the application according to the setting information.

In step 303, it is performed for storing the status setting permission information into a setting field of application information corresponding to the application.

A method for setting status of an application is provided by the second embodiment of the invention. Referring to Fig. 4, the flow of the method includes the following steps.

In step 401, it is performed for acquiring the status setting permission information of the application, when an event that triggers the setting of the status of the application occurs.

Wherein, the process of acquiring the status setting permission information of the application is:
acquiring the application information corresponding to the application, and extracting the status setting permission information from the setting field of the application information.

An event that triggers the setting of the status of the application may be restarting the terminal, cleaning the memory or locking the screen.

In step 402, if the status setting permission information indicates that it is unallowable to set the status of the application, the status of the application is not set; and if the status setting permission information indicates that it is allowable to set the status of the application, the status of the application is set as an inactive status.

Here, step 402 may be performed in respect to two situations. One is that the current application for which it is allowable to set its status is in an active status, and the status of the application is accordingly changed into inactive. The other is that the current application for which it is allowable to set its status is in an inactive status, and the status of the application is accordingly changed into inactive.

Subsequently, the applications in statuses that are changed into inactive will not receive any system broadcast message.

It can be seen from the above that, in the second embodiment of the invention, by acquiring status setting permission information of an application, and setting the status of the application as an inactive status, the application is disabled to receive system broadcast messages. Hence, without manually changing the statuses of applications by users, the number of applications that will receive system broadcast messages may be effectively restrained, thus solving the problem of increased power consumption caused by the applications receiving system broadcast messages, and decreasing the risk of leakage of the user information resulted from the self-restart of the applications after they receive system broadcast messages.

### The Third Embodiment

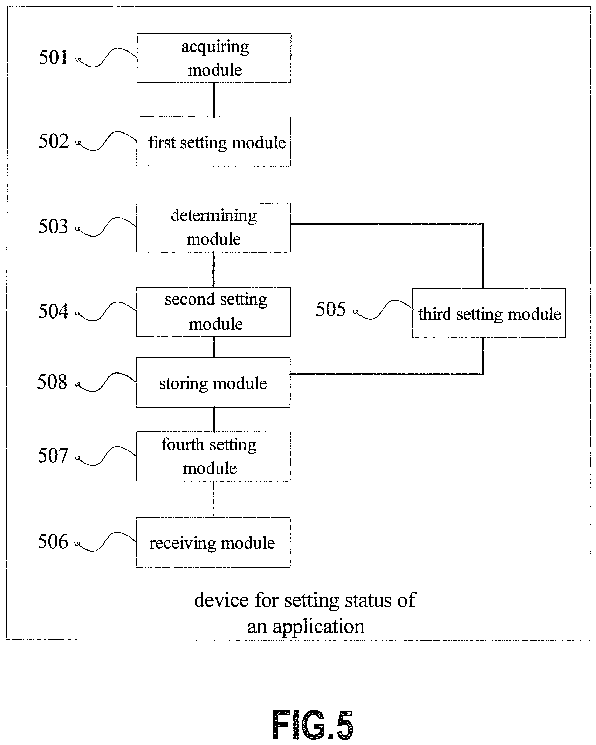

A device for setting status of an application is provided by a third embodiment of the invention. Referring to Fig. 5, the device comprises:
an acquiring module 501 configured to acquire status setting permission information of the application; and
a first setting module 502 configured to set the status of the application as an inactive status if the status setting permission information indicates that it is allowable to set the status of the application.

As an optional embodiment, the acquiring module 501 is configured to acquire the status setting permission information of the application, when an event that triggers the setting of the status of the application occurs.

Further, there are two ways for setting the status setting permission information.

The first way for setting the status setting permission information is realized through the following modules:
a determining module 503 configured to determine whether the application is in a preset white list when the application is installed, wherein the white list is used for recording the applications that need to be run in background;
a second setting module 504 configured to set the status setting permission information of the application to indicate it is unallowable to set the status of the application if the application is in the white list; and
a third setting module 505 configured to set the status setting permission information of the application to indicate it is allowable to set the status of the application if the application is not in the white list.

The second way for setting the status setting permission information is realized through the following modules:
a receiving module 506 configured to receive setting information in respect to the application input by a user, wherein the setting information indicates whether it is allowable to set the status of the application;
a fourth setting module 507 configured to set the status setting permission information of the application according to the setting information.

The above modules corresponding to the first and second ways as above for setting the status setting permission information may be included simultaneously in the device according to the third embodiment of the invention.

The device according to the third embodiment of the invention may also include a module configured to store the status setting permission information:
a storing module 508 configured to store the status setting permission information in a setting field of application information corresponding to the application.

It can be seen from the above that, in the third embodiment of the invention, by acquiring status setting permission information of an application, and setting the status of the application as an inactive status, the application is disabled to receive system broadcast messages. Hence, without manually changing the status of applications by users, the number of applications that will receive system broadcast messages may be effectively restrained, thus solving the problem of increased power consumption caused by the applications receiving system broadcast messages, and decreasing the risk of leakage of the user information resulted from the self-restart of the applications after they receive system broadcast messages.

The order of the above disclosed embodiments are only for description purpose, and do not represent any superiority or inferiority of those embodiments.

It should be understood by those skilled in the art that, all or part of the steps of the above embodiments may be implemented through hardware, or through programs that give instructions to respective hardware. The programs may be stored in a computer-readable storage medium which may be a read-only memory, a magnetic disk or an optical disk.

## Claims

1. A method for setting status of an application, the method comprising steps of:
acquiring (101) status setting permission information of the application; and
setting (102) the status of the application as an inactive status if the status setting permission information indicates that it is allowable to set the status of the application, **characterized in that** the application in the inactive status is disabled to receive system broadcast provided by an Android operating system, the method further **characterized in that**, the
step of setting the status setting permission information comprises steps of:
determining (201) whether the application is in a preset white list when the application is installed, wherein the white list is used for recording the applications that need to be run in background, the white list being a list in which applications that need to be run in background are recorded and being offered by an authoritative organization;
setting (202) the status setting permission information of the application to indicate that it is unallowable to set the status of the application if the application is in the white list; and
setting (203) the status setting permission information of the application to indicate that it is allowable to set the status of the application if the application is not in the white list.

2. The method according to claim 1, wherein the step of setting the status setting permission information comprises steps of :
receiving (301) setting information in respect to the application input by a user, wherein the setting information indicates whether it is allowable to set the status of the application; and
setting (302) the status setting permission information of the application according to the setting information.

3. The method according to any one of claims 1 to 2, wherein the method further comprises:
storing (303) the status setting permission information of the application into a setting field of application information corresponding to the application.

4. The method according to any one of claims 1 to 3, wherein the step of acquiring the status setting permission information of the application comprises:
acquiring (401) the status setting permission information of the application, when an event that triggers the setting of the status of the application occurs.

5. A device for setting status of an application, the device comprising:
an acquiring module (501) configured to acquire status setting permission information of the application; and
a first setting module (502) configured to set the status of the application as an inactive status if the status setting permission information indicates that it is allowable to set the status of the application, wherein the device being **characterized in that**
the application in the inactive status is disabled to receive system broadcast provided by an Android operating system, the device being further **characterized in that** it further comprises:
a determining module (503) configured to determine whether the application is in a preset white list when the application is installed, wherein the white list is used for recording the applications that need to be run in background, the white list being a list in which applications that need to be run in background are i s recorded and being offered by an authoritative organization;
a second setting module (504) configured to set the status setting permission information of the application to indicate that it is unallowable to set the status of the application if the application is in the white list; and
a third setting module (505) configured to set the status setting permission information of the application to indicate that it is allowable to set the status of the application if the application is not in the white list.

6. The device according to claim 5, wherein the device further comprises:
a receiving module (506) configured to receive setting information in respect to the application input by a user, wherein the setting information indicates whether it is allowable to set the status of the application; and
a fourth setting module (507) configured to set the status setting permission information of the application according to the setting information.

7. The device according to any one of claims 5 to 6, wherein the device further comprises:
a storing module (508) configured to store the status setting permission information of the application into a setting field of application information corresponding to the application.

8. The device according to any one of claims 5 to 7, wherein the acquiring module (501) is configured to acquire the status setting permission information of the application when an event that triggers the setting of the status of the application occurs.

9. A computer program including instructions for executing the steps of a method for setting status of an application according to any one of claims 1 to 4 when said program is executed by a computer.

10. A recording medium readable by a computer and having recorded thereon a computer program including instructions for executing the steps of a method for setting status of an application according to any one of claims 1 to 4.

## Patentansprüche

1. Verfahren zum Einstellen des Status einer Anwendung, umfassend Schritte des:
Erfassens (101) von Berechtigungsinformationen zum Einstellen eines Status der Anwendung und
Einstellens (102) des Status der Anwendung als einen inaktiven Status, wenn die Berechtigungsinformationen zum Einstellen eines Status angeben, dass es zulässig ist, den Status der Anwendung einzustellen,
**dadurch gekennzeichnet, dass** die Anwendung in dem inaktiven Status deaktiviert ist, einen von einem Android-Betriebssystem bereitgestellten System-Broadcast zu empfangen, wobei das Verfahren ferner **dadurch gekennzeichnet ist, dass** der Schritt des Einstellens der Berechtigungsinformationen zum Einstellen eines Status Schritte umfasst des:
Bestimmens (201), ob die Anwendung in einer voreingestellten weißen Liste enthalten ist, wenn die Anwendung installiert wird, wobei die weiße Liste zum Aufzeichnen der Anwendungen verwendet wird, die im Hintergrund ausgeführt werden müssen, wobei die weiße Liste eine Liste ist, in der Anwendungen, die im Hintergrund ausgeführt werden müssen, aufgezeichnet werden, und von einer maßgeblichen Organisation angeboten wird,
Einstellens (202) der Berechtigungsinformationen zum Einstellen eines Status der Anwendung, um anzugeben, dass es nicht zulässig ist, den Status der Anwendung einzustellen, wenn die Anwendung in der weißen Liste enthalten ist, und
Einstellens (203) der Berechtigungsinformationen zum Einstellen eines Status der Anwendung, um anzugeben, dass es zulässig ist, den Status der Anwendung einzustellen, wenn die Anwendung nicht in der weißen Liste enthalten ist.

2. Verfahren nach Anspruch 1, wobei der Schritt des Einstellens der Berechtigungsinformationen zum Einstellen eines Status Schritte umfasst des:
Empfangens (301) von Einstellungsinformationen in Bezug auf die von einem Benutzer eingegebene Anwendung, wobei die Einstellungsinformationen angeben, ob es zulässig ist, den Status der Anwendung einzustellen, und
Einstellens (302) der Berechtigungsinformationen zum Einstellen eines Status der Anwendung gemäß den Einstellungsinformationen.

3. Verfahren nach einem der Ansprüche 1 bis 2, wobei das Verfahren ferner umfasst:
Speichern (303) der Berechtigungsinformationen zum Einstellen eines Status der Anwendung in einem Einstellungsfeld von Anwendungsinformationen, die der Anwendung entsprechen.

4. Verfahren nach einem der Ansprüche 1 bis 3, wobei der Schritt des Erfassens der Berechtigungsinformationen zum Einstellen eines Status der Anwendung umfasst:
Erfassen (401) der Berechtigungsinformationen zum Einstellen eines Status der Anwendung, wenn ein Ereignis auftritt, welches das Einstellen des Status der Anwendung auslöst.

5. Vorrichtung zum Einstellen eines Status einer Anwendung, wobei die Vorrichtung umfasst:
ein Erfassungsmodul (501), das dazu ausgestaltet ist, Berechtigungsinformationen zum Einstellen eines Status der Anwendung zu erfassen, und
ein erstes Einstellungsmodul (502), das dazu ausgestaltet ist, den Status der Anwendung als einen inaktiven Status einzustellen, wenn die Berechtigungsinformationen zum Einstellen eines Status angeben, dass es zulässig ist, den Status der Anwendung einzustellen, wobei die Vorrichtung **dadurch gekennzeichnet ist, dass**
die Anwendung in dem inaktiven Status deaktiviert ist, einen von einem Android-Betriebssystem bereitgestellten System-Broadcast zu empfangen, wobei die Vorrichtung ferner **dadurch gekennzeichnet ist, dass** sie ferner umfasst:
ein Bestimmungsmodul (503), das dazu ausgestaltet ist, zu bestimmen, ob die Anwendung in einer voreingestellten weißen Liste enthalten ist, wenn die Anwendung installiert wird, wobei die weiße Liste zum Aufzeichnen der Anwendungen verwendet wird, die im Hintergrund ausgeführt werden müssen, wobei die weiße Liste eine Liste ist, in der Anwendungen, die im Hintergrund ausgeführt werden müssen, aufgezeichnet werden, und von einer maßgeblichen Organisation angeboten wird,
ein zweites Einstellungsmodul (504), das dazu ausgestaltet ist, die Berechtigungsinformationen zum Einstellen eines Status der Anwendung einzustellen, um anzugeben, dass es nicht zulässig ist, den Status der Anwendung einzustellen, wenn die Anwendung in der weißen Liste enthalten ist, und
ein drittes Einstellungsmodul (505), das dazu ausgestaltet ist, die Berechtigungsinformationen zum Einstellen eines Status der Anwendung einzustellen, um anzugeben, dass es zulässig ist, den Status der Anwendung einzustellen, wenn die Anwendung nicht in der weißen Liste enthalten ist.

6. Vorrichtung nach Anspruch 5, wobei die Vorrichtung ferner umfasst:
ein Empfangsmodul (506), das dazu ausgestaltet ist, Einstellungsinformationen in Bezug auf die von einem Benutzer eingegebene Anwendung zu empfangen, wobei die Einstellungsinformationen angeben, ob es zulässig ist, den Status der Anwendung einzustellen, und
ein viertes Einstellungsmodul (507), das dazu ausgestaltet ist, die Berechtigungsinformationen zum Einstellen eines Status der Anwendung gemäß den Einstellungsinformationen einzustellen.

7. Vorrichtung nach einem der Ansprüche 5 bis 6, wobei die Vorrichtung ferner umfasst:
ein Speichermodul (508), das dazu ausgestaltet ist, die Berechtigungsinformationen zum Einstellen eines Status der Anwendung in einem Einstellungsfeld von Anwendungsinformationen zu speichern, die der Anwendung entsprechen.

8. Vorrichtung nach einem der Ansprüche 5 bis 7, wobei das Erfassungsmodul (501) dazu ausgestaltet ist, die Berechtigungsinformationen zum Einstellen eines Status der Anwendung zu erfassen, wenn ein Ereignis auftritt, welches das Einstellen des Status der Anwendung auslöst.

9. Computerprogramm, das Anweisungen zum Ausführen der Schritte eines Verfahrens zum Einstellen eines Status einer Anwendung nach einem der Ansprüche 1 bis 4 beinhaltet, wenn das Programm von einem Computer ausgeführt wird.

10. Aufzeichnungsmedium, das von einem Computer gelesen werden kann und auf dem ein Computerprogramm aufgezeichnet ist, das Anweisungen zum Ausführen der Schritte eines Verfahrens zum Einstellen eines Status einer Anwendung nach einem der Ansprüche 1 bis 4 beinhaltet.

## Revendications

1. Procédé de définition de l'état d'une application, le procédé comprenant les étapes ci-dessous consistant à :
acquérir (101) des informations d'autorisation de définition d'état de l'application ; et
définir (102) l'état de l'application en tant qu'un état inactif, si les informations d'autorisation de définition d'état indiquent qu'il est autorisé de définir l'état de l'application ;
**caractérisé en ce que** :
l'application à l'état inactif est désactivée pour recevoir une diffusion système fournie par un système d'exploitation Android, le procédé étant en outre **caractérisé en ce que** l'étape de définition des informations d'autorisation de définition d'état comprend les étapes ci-dessous consistant à :
déterminer (201) si l'application figure dans une liste blanche prédéfinie lorsque l'application est installée, dans lequel la liste blanche est utilisée en vue d'enregistrer les applications qui doivent être exécutées en arrière-plan, la liste blanche étant une liste dans laquelle des applications qui doivent être exécutées en arrière-plan sont enregistrées et étant une liste proposée par une organisation faisant autorité ;
définir (202) les informations d'autorisation de définition d'état de l'application en vue d'indiquer qu'il est interdit de définir l'état de l'application si l'application figure dans la liste blanche ; et
définir (203) les informations d'autorisation de définition d'état de l'application en vue d'indiquer qu'il est autorisé de définir l'état de l'application si l'application ne figure pas dans la liste blanche.

2. Procédé selon la revendication 1, dans lequel l'étape de définition des informations d'autorisation de définition d'état comprend les étapes ci-dessous consistant à :
recevoir (301) des informations de définition concernant l'application, saisies par un utilisateur, dans lequel les informations de définition indiquent s'il est autorisé de définir l'état de l'application ; et
définir (302) les informations d'autorisation de définition d'état de l'application selon les informations de définition.

3. Procédé selon l'une quelconque des revendications 1 à 2, dans lequel le procédé comprend en outre l'étape ci-dessous consistant à :
stocker (303) les informations d'autorisation de définition d'état de l'application dans un champ de définition d'informations d'application correspondant à l'application.

4. Procédé selon l'une quelconque des revendications 1 à 3, dans lequel l'étape d'acquisition des informations d'autorisation de définition d'état de l'application comprend l'étape ci-dessous consistant à :
acquérir (401) les informations d'autorisation de définition d'état de l'application, lorsqu'un événement qui déclenche la définition de l'état de l'application se produit.

5. Dispositif destiné à définir l'état d'une application, le dispositif comprenant :
un module d'acquisition (501) configuré de manière à acquérir des informations d'autorisation de définition d'état de l'application ; et
un premier module de définition (502) configuré de manière à définir l'état de l'application, en tant qu'un état inactif, si les informations d'autorisation de définition d'état indiquent qu'il est autorisé de définir l'état de l'application, dans lequel le dispositif est **caractérisé en ce que** l'application à l'état inactif est désactivée pour recevoir une diffusion système fournie par un système d'exploitation Android, le dispositif étant en outre **caractérisé en ce qu'**il comprend en outre :
un module de détermination (503) configuré de manière à déterminer si l'application figure dans une liste blanche prédéfinie lorsque l'application est installée, dans lequel la liste blanche est utilisée pour enregistrer les applications qui doivent être exécutées en arrière-plan, dans lequel la liste blanche est une liste, proposée par une organisation faisant autorité, dans laquelle des applications qui doivent être exécutées en arrière-plan sont enregistrées ;
un deuxième module de définition (504) configuré de manière à définir les informations d'autorisation de définition d'état de l'application en vue d'indiquer qu'il est interdit de définir l'état de l'application si l'application figure dans la liste blanche ; et
un troisième module de définition (505) configuré de manière à définir les informations d'autorisation de définition d'état de l'application en vue d'indiquer qu'il est autorisé de définir l'état de l'application si l'application ne figure pas dans la liste blanche.

6. Dispositif selon la revendication 5, dans lequel le dispositif comprend en outre :
un module de réception (506) configuré de manière à recevoir des informations de définition concernant l'application, saisies par un utilisateur, dans lequel les informations de définition indiquent s'il est autorisé de définir l'état de l'application ; et
un quatrième module de définition (507) configuré de manière à définir les informations d'autorisation de définition d'état de l'application selon les informations de définition.

7. Dispositif selon l'une quelconque des revendications 5 à 6, dans lequel le dispositif comprend en outre :
un module de stockage (508) configuré de manière à stocker les informations d'autorisation de définition d'état de l'application dans un champ de définition d'informations d'application correspondant à l'application.

8. Dispositif selon l'une quelconque des revendications 5 à 7, dans lequel le module d'acquisition (501) est configuré de manière à acquérir les informations d'autorisation de définition d'état de l'application, lorsqu'un événement qui déclenche la définition de l'état de l'application se produit.

9. Programme informatique incluant des instructions pour exécuter les étapes d'un procédé de définition de l'état d'une application selon l'une quelconque des revendications 1 à 4, lorsque ledit programme est exécuté par un ordinateur.

10. Support d'enregistrement lisible par ordinateur et sur lequel est enregistré un programme informatique incluant des instructions pour exécuter les étapes d'un procédé de définition de l'état d'une application selon l'une quelconque des revendications 1 à 4.
